Europäisches Patentamt

European Patent Office

Office européen des brevets

(11) Publication number: **0 411 602 A2**

# EUROPEAN PATENT APPLICATION

(21) Application number: 90114757.9

(51) Int. Cl.⁵: **G06K 19/08, G06K 7/12**

(22) Date of filing: 01.08.90

(30) Priority: 01.08.89 JP 201083/89

(43) Date of publication of application:
06.02.91 Bulletin 91/06

(84) Designated Contracting States:
AT BE CH DE DK ES FR GB GR IT LI NL SE

(71) Applicant: OMRON CORPORATION
10, Tsuchido-cho, Hanazono, Ukyo-ku,
Kyoto-shi, Kyoto-fu(JP)

(72) Inventor: Fukamizu, Hiroshi
2-7-40 Higashikusatsu
Kusatsu-shi, Shiga-ken(JP)

Inventor: Shimura, Mikihiko
48-13, Nango 2-chome
Ohtsu-shi, Shiga-ken(JP)
Inventor: Takeuchi, Masashi
2-2-1, Fukakusanishiura-cho, Fushimi-ku
Kyoto-shi, Kyoto-fu(JP)
Inventor: Fujiwara, Izuru
7-43-208 Asahigaoka
Toyonaka-shi, Osaka-fu(JP)

(74) Representative: Kahler, Kurt, Dipl.-Ing.
Postfach 1249 Gerberstrasse 3
D-8948 Mindelheim(DE)

(54) **Object having visible pattern including invisible information printed thereon.**

(57) An object having a visible pattern including invisible information printed thereon and a method of reading visible information and invisible information from such an object. The object (4) has a bar code pattern (22) printed thereon. A region (6) having the bar code pattern (22) printed therein comprises a portion (10) printed in first ink (24) and a portion (8) printed in first ink (24) and second ink (26). The first ink has light absorption characteristics the same with respect to visible light and infrared light and the second ink has light absorption characteristics varying with respect thereto. By scanning the region (10) by the infrared light, visible information can be obtained and by scanning the region (8) by the infrared light, invisible information, that is, information included in the visible pattern can be obtained.

FIG.1

# OBJECT HAVING VISIBLE PATTERN INCLUDING INVISIBLE INFORMATION PRINTED THEREON

## BACKGROUND OF THE INVENTION

### Field of the Invention

The present invention relates generally to printed objects, and more particularly, objects on which visible patterns including invisible information are printed.

### Description of the Background Art

In recent years, bar codes are applied on many of commodities in order to efficiently perform a registration processing by POS (Point of Sales) terminals. The bar code is formed under the standard and the number thereof is also defined. The bar codes for use in the POS system indicate predetermined information, for example, commodity identification information and accordingly, in order to represent other information on the commodity, it is necessary to increase the number of bars of the bar code, or represent the information in print or in stamp in other region among the regions on the commodity than the region in which the bar code is applied.

However, such manner requires regions in which information is printed or stamped, and therefore it is not applicable to a small commodity. For stamping the information, specific devices should be introduced, which makes the cost of a commodity higher. As the foregoing, there is a demand for adding other information than the predetermined information in a region having a predetermined print pattern not only in stores employing the above-described POS but also in offices and factories.

## SUMMARY OF THE INVENTION

An object of the present invention is, without enlarging on an object a region in which a standardized pattern is to be printed, to represent additional information.

Another object of the present invention is to provide a method of reading the above-described pattern and the additional information from such a printed object.

The object according to the present invention is characterized in claim 1.

The method of reading the information from the printed object according to the present invention is characterized in claim 8.

According to the present invention, the information is visibly represented by the printing in the first and second coloring materials of the same color and other information is invisibly included in the second coloring material in that visible representation, so that it is possible to add information without increasing the indication area.

According to the present invention, since the visible information and invisible information can be read by using one light source emitting other light than the visible light, no switching operation of the light source is required, which facilitates the reading operation of the information.

The foregoing and other objects, features, aspects and advantages of the present invention will become more apparent from the following detailed description of the present invention when taken in conjunction with the accompanying drawings.

## BRIEF DESCRIPTION OF THE DRAWINGS

Fig. 1 is a view showing an object on which a bar code pattern is printed according to one embodiment of the present invention.

Fig. 2 is a diagram showing light absorption characteristics of first and second ink used in printing the bar code pattern shown in Fig. 1.

Fig. 3 is a diagram showing an electrical arrangement of an optical scanner for use in reading information from the bar code pattern shown in Fig. 1.

Fig. 4 is a diagram explaining a method of reading the information from the bar code pattern shown in Fig. 1.

Fig. 5A is a diagram showing a character pattern according to another embodiment of the present invention and Fig. 5B is a diagram showing an information signal which can be obtained by scanning the character pattern shown in Fig. 5A by the optical scanner shown in Fig. 3.

Fig. 6 is a diagram showing a character pattern and information latently included therein according to a further embodiment of the present invention.

## DESCRIPTION OF THE PREFERRED EMBODIMENTS

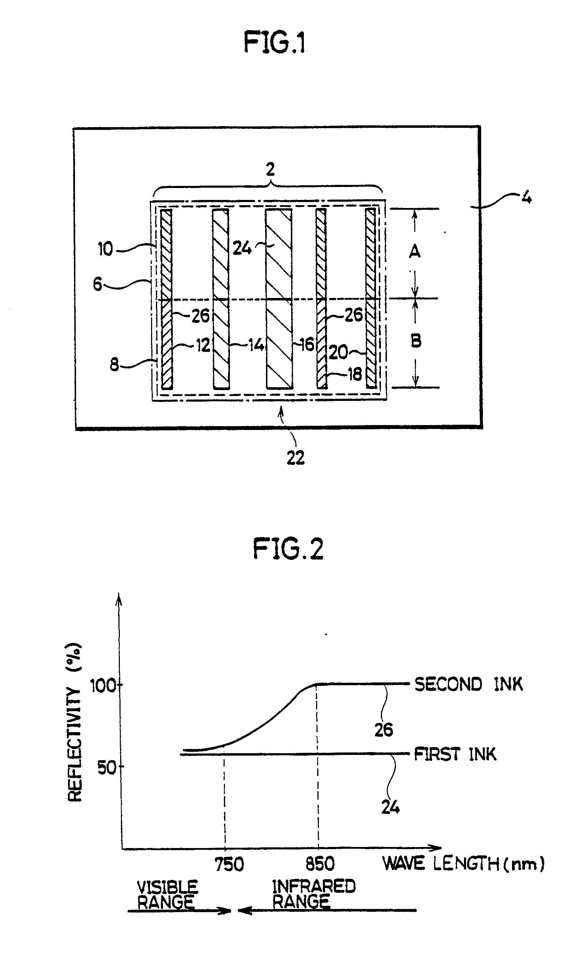

Referring to Fig. 1, a print pattern of a bar code according to one embodiment of the present invention will be described. In Fig. 1, a print pattern 2 comprising bar code 22 is printed on an object 4. A printed region 6 of the print pattern 2 comprises a region 10 indicated by A and a region 8 indicated by B. The bar code 22 is visible representation of encoded predetermined information (for example prices of commodities) in two types of ink of the same color, wherein the portion 10 indicated by A in Fig. 1 is printed only in first ink 24 (indicated by oblique lines going down from left to right) and the portion 8 indicated by B is printed in the first ink 24 and second ink 26 (indicated by oblique lines going down from right to left). Namely, in the portion 8 indicated by B, portions 14, 16 and 20 are printed in the first ink and portions 12 and 18 are printed in the second ink.

Used as the first ink 24 is one having light absorption characteristics the same with respect to visible range light and light having wavelength other range than that of the visible light (for example, in infrared range) and capable of absorbing both the visible range light and the infrared range light. The first ink is comprised of, for example, pigment of carbon black. Used as the second ink 26 is one having light absorption characteristics varying with visible range light and light having wavelength of other range than that (for example, infrared range) and capable of absorbing only the visible range light. The second ink is comprised of, for example, basic dye. The first ink and the second ink are of the same color, that is, they have almost the same light absorption characteristics with respect to visible light. Accordingly, while such information (primary information) as prices is visibly represented in the entire region 6 in which the bar code 22 is printed, another information (secondary information) is invisibly included in the portion 8 of the bar codes 22.

Fig. 2 shows absorption characteristics of the first and second ink. In Fig. 2, the abscissa represents wavelength of light and the ordinate represents ref lectivity of ink. It can be seen from Fig. 2 that while the first ink 24 absorbs both visible light and light having wavelength in the range of infrared, the second ink 26 absorbs only the light in the range of visible wavelength. Accordingly, while when the first and second ink are irradiated by the light in the range of visible wavelength (for example, 750 nm), reflectivity of each the ink is about 50 %, when the first and second ink are irradiated by the light in the range of wavelength of infrared (for example, 850 nm), the first ink 24 and the second ink 26 differs in ref lectivity, that of the first ink 24 is about 50 % and that of the second ink 26 is about 100 %.

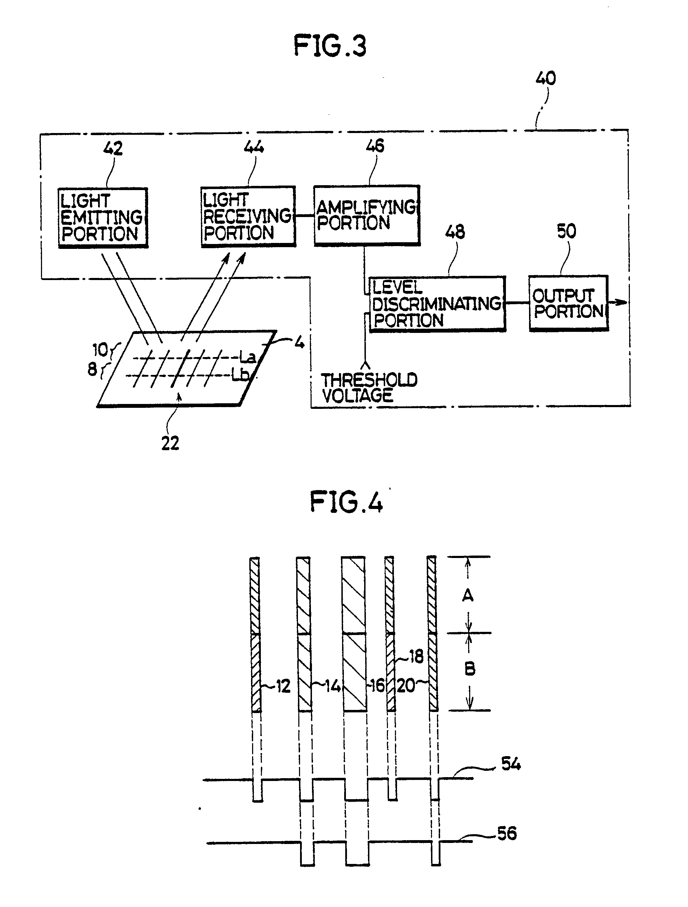

Referring to Fig. 3, an arrangement of an optical scanner for use in reading the above-described bar code will be described. An optical scanner 40 comprises a light emitting portion 42 and a light receiving portion 44, the light emitting portion 42 emitting a light in the range of wavelength of infrared (for example, 850 nm). A light signal received by the light receiving portion 44 is converted into an electric signal and applied to an amplifying portion 46. The amplified signal is applied to a level discriminating portion 48, wherein the determination is made as to whether a voltage of the amplified signal is higher or lower than a predetermined threshold voltage. The threshold voltage is set to, for example, a signal voltage value obtained at the reflectivity of about 75 %, the intermediate value between a signal voltage obtained at the reflectivity of about 50 % and that obtained at the reflectivity of about 100 %. When a signal of higher voltage than the threshold voltage is inputted to the level discriminating portion 48, an output portion 50 outputs a signal of, for example, about 5.0 V indicating "1". When a signal of a lower voltage than the threshold voltage is inputted to the level discriminating portion 48, the output portion 50 outputs a signal of about 0.4 V indicating "0".

Now, referring to Figs. 3 and 4, a reading operation of the information from the bar code by the optical scanner will be described. The light emitting portion 42 emits infrared light onto the bar code 22 on a wrapping paper of the commodity. The emitted light is received bv the light receiving portion 44. By the scanning along a dotted line La located in the region 10 shown in Fig. 3, the information can be obtained from the portion A. Since the portion A is printed in the first ink absorbing both the light in the range of wavelength of visible light and infrared, visible information shown in an output waveform 54 in Fig. 4 can be obtained. Then, by the scanning along a dotted line Lb located in the region 8 shown in Fig. 3, the information can be obtained from the portion B. Since the portion B is printed in the first ink and the second ink absorbing only the light in the range of visible wavelength and 100 percent reflecting the light in the range of wavelength of infrared, the information shown in an output waveform 56 in Fig. 4 can be read. Namely, the information invisibly represented in the portion B can be read by using the infrared light.

As the foregoing, since it is possible to invisibly and latently include another secondary information in the visible representation representing the predetermined primary information, encoded additional information such as production lot numbers and information on quality can be represented in the portion B of the bar code without providing additional region for representation on the commodity.

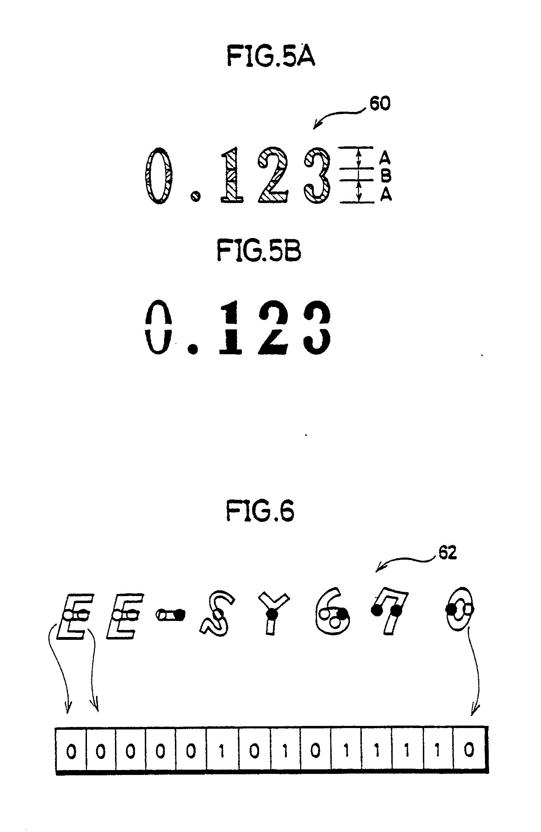

Fig. 5A shows another embodiment wherein secondary information is invisibly included in visible representation representing primary information. A sequence of numbers 60 shown in Fig. 5A visibly represents predetermined numerical inf ormation in two types of ink of the same color, similarly in the above-described case, wherein a portion indicated by A is printed in the first ink (indicated by oblique lines going down from left to right) and a portion indicated by B is printed in the second ink (indicated by oblique lines going down from right to left). Accordingly, while the sequence of numbers 60 visibly represents specific numerical information "0.123" as a whole, it invisibly includes another information (for example, registration line of the sequence of numbers) in the portion B of this sequence of numbers. Fig. 5B shows a character pattern obtained by reading the sequence of numbers shown in Fig. 5A by the optical scanner 40 shown in Fig. 3. In Fig. 5B, the portion printed in the second ink is whited out.

Fig. 6 shows production lot number information added in the character pattern representing a name of a product. In Fig. 6, black dots represent portions of the first ink and whited-out circles represent portions of the second ink. A character pattern 62 shown in Fig. 6 includes information of a product name "EE-SY670" and information of "0000/0101/0111/10". The latter information represents year, month and day from the top, in this case indicating that date of manufacture is May 27, 1990.

As in the foregoing, the production lot numbers can be included in the print pattern representing the name of the product, no additional region is required for printing the lot number.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An object (4) having a pattern (2) visible to human eyes printed thereon, said print pattern (2) comprising information (54) perceivable by visible light and information (56) perceivable by other light than the visible light.

2. An object (4) having a pattern (2) visible to human eyes printed thereon according to claim 1, wherein said visible print pattern (2) being printed in a first coloring material (24) having light absorption characteristics the same with respect to visible light and light having wavelength other than that of the visible light and in a second coloring material (26) having the same color as that of said first coloring material and having light absorption characteristics varying with the visible light and light having wavelength other than that of the visible light, thereby representing information (54) perceivable by visible light and information (56) perceivable by other light than the visible light.

3. The object having the pattern visible to human eyes printed thereon according to claim 1 or 2, wherein said print pattern is a bar code pattern (22).

4. The object having the pattern visible to human eyes printed thereon according to claim 1 or 2, wherein said print pattern is a character pattern (60, 62).

5. The object having the visible print pattern printed thereon according to any of claims 2 to 5, wherein said first coloring material is a pigment material and said second coloring material is a dye material.

6. The object having the visible print pattern printed thereon according to any preceding claim, wherein said light having wavelength other than that of the visible light is infrared light.

7. An object (4) having a pattern (2) visible to human eyes printed thereon according to any preceding claim, said visible pattern comprising:
- a portion (10) printed only in said first coloring material (24) and representing first information (54) perceivable by visible light, and
- a portion (8) printed in said first and second coloring materials (24 and 26) and representing second information (56) perceivable by other light than the visible light.

8. A method of reading information from an object (4) having a visible pattern (2) printed thereon, said visible pattern being printed in a first coloring material (24) having light absorption characteristics the same with respect to visible light and light having wavelength other than that of the visible light and a second coloring material (26) having the same color as that of said first coloring material and having light absorption characteristics varying with the visible light and the light having wavelength other than that of the visible light, said visible pattern (2) including a portion (10) printed only in said first coloring material and representing first information (54) perceivable by visible light and a portion (8) printed in said first and second coloring materials (24, 26) and representing second information (56) perceivable by other light than the visible light, said method comprising the steps of:
- reading said first information (54) by scanning said portion (10) including said first information by the light having wavelength other than that of the visible light, and
- reading said second information (56) by scanning said portion (8) including said second information by the light having wavelength other than that of the visible light.

9. The method of claim 8, wherein said light having a wavelength other than that of visible light is generated by a single light source.

# FIG.1

# FIG.2

## FIG.3

## FIG.4

## FIG.5A

0.123

60

## FIG.5B

0.123

## FIG.6

62

| 0 | 0 | 0 | 0 | 0 | 1 | 0 | 1 | 0 | 1 | 1 | 1 | 1 | 0 |
|---|---|---|---|---|---|---|---|---|---|---|---|---|---|